# EUROPÄISCHE PATENTANMELDUNG

(11) **EP 1 121 860 A1**
(43) Veröffentlichungstag der Anmeldung: **08.08.2001**
(21) Anmeldenummer: 00101867.0
(22) Anmeldetag: 31.01.2000
(51) Int. Cl.: A21D 13/04, A21D 2/26, A21D 2/36, A21D 8/02

(54) **Brotbackmischung**

(71) Anmelder: Gemeinnützige Stiftung für Existenzanalyse, 4058 Basel (CH)
(72) Erfinder: Dirk, Schröder, 2502 Biel (CH)
(74) Vertreter: Büchel, Kurt F., Dr.

(57) **Zusammenfassung**

Brotbackmischung für Spezialbackwaren zur Förderung des allgemeinen Gesundheitszustandes, die eine Mehlmischung aus zumindest 95 Gew.% Gerstenmehl sowie Mahlprodukte aus Hirse, Bohnen und Linsen enthält. Zusätzlich kann Schwarzkümmel zugesetzt werden.

## Beschreibung

Die Erfindung betrifft eine Brotbackmischung sowie ein Verfahren zur Herstellung von Backwaren aus dieser Mischung.

Es ist bekannt, dass manche Körner und Hülsenfrüchte auf bestimmte Organe, Gewebe oder Teile des Stoffwechselsystems positive, die Gesundung fördernde, Wirkungen ausüben können. Solche Körner und Hülsenfrüchte stärken bei regelmässigem Verzehr das Gesundheitssystem im Allgemeinen und unterstützen deshalb die Vorbeugung von Krankheiten.

Die Erfindung hat sich zur Aufgabe gestellt, eine in ihrer Zusammensetzung besonders ausgewogene Brotbackmischung aus Körnern und Hülsenfrüchten bereitzustellen, die - zu Backwaren weiterverarbeitet - nicht nur eine allgemeine gesundheitsfördernde Wirkung auf den Körper ausübt, sondern darüber hinaus auch zu einem ausgezeichneten Geschmack bei den fertigen Backwaren führt.

Die Erfindung schlägt eine Brotbackmischung vor, deren Mehl aus einer Mischung von Mehl aus Gerste (vorzugsweise Hordeum Vulgare L., insbesondere entspelzt) mit Mahlprodukten von Hirse (vorzugsweise Panicum miliaceum L., insbesondere geschält), Bohnen (vorzugsweise weisse Gartenbohne, Phaseolus vulgaris L.) und Linsen (trockene Samen, vorzugsweise Lens esculenta moench) besteht.

Gerstenmehl ist zumindest mit 95 Gew.%, bevorzugt 97-98 Gew.% in der Mehlmischung enthalten. Gerste wirkt auf die Regeneration des Knochenmarks und damit auf die Knochen.

Hirse, gegebenenfalls als Griess vorliegend, wird mit 1-2 Gew.%, bevorzugt 1,5 bis 1,7 Gew.%, in der Mehlmischung eingesetzt und fördert die Drainage der Lymphflüssigkeit aus der Milz.

Die Bohnen, bevorzugt fein gemahlen, sind mit 0,1 bis 1 Gew.%, bevorzugt 0,6 bis 1 Gew.% in der Mehlmischung enthalten und unterstützen die Entsäuerung des Fleischgewebes der Haut.

Linsen, bevorzugt ebenfalls fein gemahlen, mit 0,01 bis 0,1 Gew.%, bevorzugt 0,05 bis 0,1 Gew.%, in der Mehlmischung enthalten, tragen zu einer allgemeinen Beruhigung durch Beeinflussung des Hormonhaushalts im Drüsensystem bei.

Insbesondere die Mahlprodukte der Bohnen und Linsen können neben dem Stärkemehl auch die jeweiligen Schalenteile enthalten.

Zusätzlich kann die Mehlmischung bei Bedarf mit diversen Gewürzen beziehungsweise Kräutern verfeinert werden.

Die Mehlmischung wird in bekannter Weise mit Wasser unter der Verwendung von NaHCO₃ als Backhilfe zu einem Teig angerührt und geknetet. Dazu kann man beispielsweise 3 Gewichtsteilen Mehlmischung 2 Gewichtsteile Wasser (vorzugsweise gereinigt, insbesondere destilliert) zusetzen. Wasser und NaHCO₃ üben ebenfalls einen positiven Einfluss auf das Gesundheitssystem aus, da NaHCO₃ die Reinigung der Leber durch die Gallenflüssigkeit und Wasser die Blutreinigung unterstützen.

Diese zu einem Teig angerührte Mehlmischung kann zusätzlich mit etwas Schwarzkümmel (Nigella sativa) versetzt werden, der anregend auf die Nierenreinigung durch den Harn wirkt.

Es werden nicht nur bestimmte Körperfunktionen durch die ausgewählten Komponenten der Erfindung beeinflusst, sondern die positiven Einzelwirkungen der Bestandteile entwickeln auch wegen der Ausgewogenheit in der Zusammensetzung eine überraschend starke und vielseitige Synergie auf den gesamten Körper, wodurch sich die erfindungsgemässe Brotbackmischung besonders für die Verwendung in einem gesundheitsfördernden Nahrungsmittel eignet. Somit kann individuell durch regelmässigen und dabei genussvollen Verzehr einer aus der Brotbackmischung gefertigten Backware auf einfache Weise der allgemeine Gesundheitsstatus gestärkt werden.

Für Erwachsene wird eine tägliche Ration von etwa 330 g der erfindungsgemässen Brotbackmischung empfohlen.

### Beispiel:

120 g gemahlene Gerste und 2 g Hirsegriess werden gemischt. Dann werden 1 g weisse Bohnen in einem Mörser zerstampft, fein gemahlen und dazugemischt. Anschliessend werden 0,1 g feingemahlene Linsen ebenfalls dazugemischt.

Separat werden 0,5 g NaHCO₃ in 0,85 I Wasser aufgelöst. Diese Lösung wird nach und nach dem Mehl zugegeben; der werdende Teig wird laufend gerührt und schliesslich, bevorzugt von Hand, geknetet.

Der fertige Teig wird danach zu einem Strang geformt und nach der Art der Parisette-Bäcker etwa 5 Minuten lang zum Zwecke der Sauerstoffzufuhr auf den Tisch geschlagen.

Der Teig wird nun zu einer Kugel geformt und danach zu einem runden Fladen gewalzt, dessen Dicke - bei den im Beispiel angegebenen Mengen - bevorzugt etwa 7 mm und dessen Durchmesser etwa 15 cm betragen soll. Die Oberfläche des Fladens wird dann leicht angefeuchtet und anschliessend 1 g ungemahlener Schwarzkümmel darübergestreut und leicht von Hand in den Teig gedrückt.

Den so vorbereiteten Fladen lässt man etwa 30 min ruhen, um den Teig durch das NaHCO₃ zum Quellen zu bringen, d.h. den Teig leicht "aufgehen" zu lassen.

Danach wird der Fladen im vorgeheizten Backofen bei etwa 200-230°C 18min. gebacken und kann nach dem Abkühlen verzehrt werden.

Eine Backware nach dieser beispielhaften Rezeptur von etwa 209 g entspricht etwa 64 Prozent der empfohlenen Tagesmenge für einen Erwachsenen und wurde von Testpersonen genussvoll verzehrt.

## Patentansprüche

1. Brotbackmischung, die eine Mehlmischung mit zumindest 95 Gew.% Mehl aus Gerste (vorzugsweise Hordeum Vulgare L.), in Mischung mit Mahlprodukten von Hirse (vorzugsweise Panicum miliaceum L.), Bohnen (vorzugsweise Gartenbohne, Phaseolus vulgaris L.) und Linsen (vorzugsweise Lens esculenta moench) enthält

2. Brotbackmischung nach Anspruch 1, die 1-2 Gew.% Hirse; 0,1-1 Gew.% Bohnen und 0,01-0,1 Gew.% Linsen in der Mehlmischung enthält.

3. Brotbackmischung nach Anspruch 1, die 1,5 - 1,7 Gew.% Hirse; 0,6 - 1 Gew.% Bohnen und 0,05 - 0,1 Gew.% Linsen in der Mehlmischung enthält.

4. Brotbackmischung nach einem der Ansprüche 1 bis 3, die in der Mehlmischung 97 - 98 Gew.% Gerstenmehl enthält.

5. Brotbackmischung nach einem der Ansprüche 1 bis 4, in der die Hirse als Griess vorliegt.

6. Brotteig aus einer Brotbackmischung nach einem der Ansprüche 1 bis 5, der Wasser und NaHCO₃ zugesetzt sind.

7. Brotteig nach Anspruch 6, bestehend aus etwa 3 Gewichtsteilen Brotbackmischung und etwa 2 Gewichtsteilen Wasser.

8. Brotteig nach einem der Ansprüche 6 oder 7, dem Schwarzkümmel (Nigella sativa) zugesetzt ist.

9. Backwaren, die aus einem Brotteig nach einem der Ansprüche 6 bis 8 hergestellt sind.

10. Verfahren zur Herstellung von Backwaren, gekennzeichnet durch folgende Schritte:
- Zubereiten einer Mehlmischung aus zumindest 95 Gew.% Mehl aus Gerste (vorzugsweise Hordeum Vulgare L.), Rest Mahlprodukte von Hirse (vorzugsweise Panicum miliaceum L.), Bohnen (vorzugsweise Gartenbohne, Phaseolus vulgaris L.) und Linsen (vorzugsweise Lens esculenta moench) sowie gegebenenfalls NaHCO₃;
- Zugeben von Wasser - gegebenenfalls mit darin gelöstem NaHCO₃ - zur Mehlmischung unter gleichzeitigem Rühren der Mischung zu einem Teig;
- Kneten des Teiges; gegebenenfalls etwa 5 minütiges Schlagen des Teiges gegen eine feste Oberfläche;
- gegebenenfalls Anfeuchten der Oberseite des Teiges;
- gegebenenfalls wird Schwarzkümmel (Nigella sativa) auf die Teigoberseite gestreut und eingedrückt, oder in den Teig eingearbeitet;
- etwa 30 minütiges Rasten des Teiges, und
- Backen in einem Backofen bei 200-230°C
